# EUROPEAN PATENT APPLICATION

(11) **EP 3 741 717 A1**
(43) Date of publication of application: **25.11.2020**
(21) Application number: 19175424.1
(22) Date of filing: 20.05.2019
(51) Int. Cl.: B65G 54/02, H02K 9/19, H02K 41/03, H02K 5/20, B60L 13/00, B65B 7/28, B65B 61/18

(54) **CONVEYING DEVICE, PACKAGING MACHINE HAVING SUCH A CONVEYING DEVICE AND METHOD OF COOLING SUCH A CONVEYING DEVICE**

(71) Applicant: Tetra Laval Holdings & Finance S.A., 1009 Pully (CH)
(72) Inventor: SACCHETTI, Elena, 42015 Correggio (IT); CANALINI, Pierluigi, 41126 Modena (IT); BORGHI, Davide, 41121 Modena (IT); VIOLA, Massimo, IT-41054 Marano sul Panaro (IT); MALAGUTTI, Marcello, 41125 Modena (IT)
(74) Representative: Tetra Pak - Patent Attorneys SE

(57) **Abstract**

Conveying device (2) comprising a plurality of drive modules (4) arranged in succession of one another and at least partially defining a track (5), at least one cart (6) being moveably engaged and/or engageable to the drive modules (4) and/or the track (5), a support structure (7) supporting and/or carrying the drive modules (4) and cooling means (19) coupled to the support structure and configured to cool the support structure (7) for cooling the drive modules (4).

## Description

### TECHNICAL FIELD

The present invention relates to a conveying device, in particular a linear motor conveying device, having at least one track, in particular an endless track, and at least one cart moveably arranged on the track.

The present invention also relates to a packaging machine having a conveying device, in particular a linear motor conveying device.

The present invention also relates to a method of cooling a conveying device, in particular a linear motor conveying device.

### BACKGROUND ART

In the recent years, linear motor conveying devices have gained importance in packaging machines as they permit a significant increase in the flexibility of the operation of packaging machines, for example for handling and/or treating packages such as packages filled with a pourable product.

Linear motor conveying devices typically comprise a track, in particular an endless track and a plurality of movable carts moveably coupled to the track and configured to advance independently from one another along an advancement path defined by the track.

Typically, the linear motor conveying device also comprises a control unit configured to control the advancement of the carts along the track and accordingly the advancement path.

Typically, the linear motor conveying device also comprises a support structure and a plurality of drive modules arranged in succession on the support structure and defining the track. Each drive module comprises at least one coil assembly and control electronics. In particular, the coil assemblies and the control electronics are controlled by the control unit and the coil assemblies are controlled in such a manner to selectively and, in particular independently from the other movable carts, advance each movable cart along the track and the advancement path. This allows e.g. to vary the speed, within certain limits, of each movable cart independently from the speed of the other movable carts.

A drawback of these linear motor conveying devices can be seen in the fact that the number of carts and their operation speeds need to be contained within certain limits so as to avoid any overheating of the drive modules. This restricts the overall possible production capacities of the packaging machines

Thus, a desire is felt in the sector so as to increase the operation speed of the linear motor conveying devices.

### DISCLOSURE OF INVENTION

It is therefore an object of the present invention to provide a conveying device to overcome, in a straightforward and low-cost manner, at least one of the aforementioned drawbacks.

In particular, it is an object of the present invention to provide a conveying device allowing for increased operation speeds.

In particular, it is a further objective of the present invention to provide a packaging machine having a conveying device allowing for increased operation speeds.

In particular, it is another objective of the present invention to provide a method of cooling a conveying device allow for increased operation speeds.

According to the present invention, there is provided a conveying device according to the independent claim.

Preferred embodiments of the present invention are claimed in the dependent claims.

According to the present invention, there is also provided a packaging machine according to any one of claims 11 to 13.

According to the present invention, there is also provided a method of cooling a conveying device according to claim 14 or 15.

### BRIEF DESCRIPTION OF THE DRAWINGS

A non-limiting embodiment of the present invention will be described by way of example with reference to the accompanying drawings, in which:
Figure 1 is a perspective view of a conveying apparatus having two conveying devices according to the present invention, with parts removed for clarity;
Figure 2 is a side view of one conveying device of Figure 1, with parts removed for clarity;
Figure 3 is a perspective view of a detail of the conveying device of Figures 1 and 2, with parts removed for clarity;
Figure 4 is an enlarged and partially sectionized perspective view of a portion of the detail of Figure 3, with parts removed for clarity; and
Figure 5 is an enlarged perspective view of a further detail of the conveying device of Figures 1 and 2, with parts removed for clarity.

### BEST MODES FOR CARRYING OUT THE INVENTION

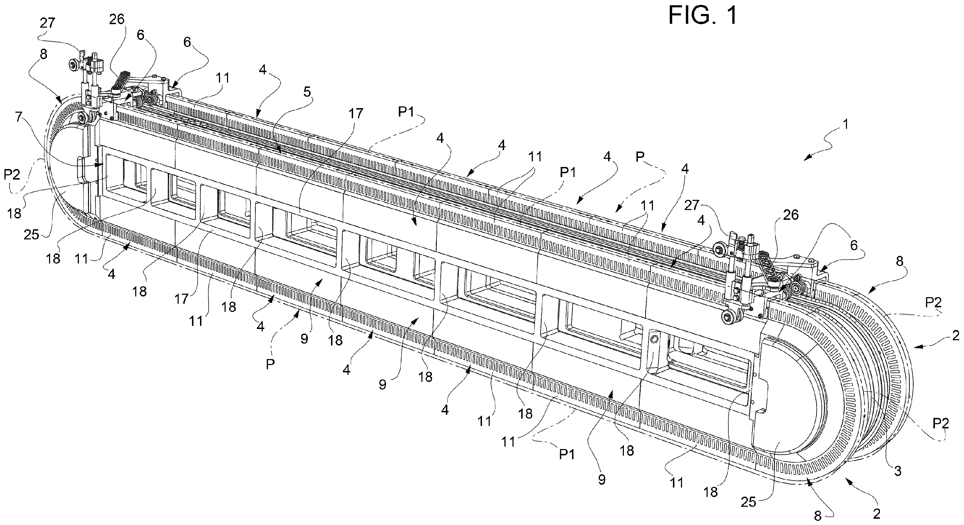

Number 1 in Figure 1 illustrates as a whole a conveying apparatus, in particular of a packaging machine, comprising one or more conveying devices 2, in particular one or more linear motor conveying devices 2, even more particular one or more endless linear motor conveying devices 2, in the specific case shown two.

According to a preferred non-limiting embodiment, the packaging machine is adapted to produce and/or handle and/or treat packages, such as bottles or containers. Preferentially but not necessarily, the packaging machine is configured to produce and/or to handle and/or to treat packages being filled with a pourable product.

According to the specific non-limiting embodiment disclosed, the packaging machine is configured to apply closures onto the packages being filled with the pourable product, in particular during advancement of the packages along a package advancement path. In particular, the packaging machine is configured to apply closures onto the packages in the area (at) of a rupturable and/or pierceable zone of the packages.

In alternative, packaging machine could be configured to form packages from a tube obtained from a web of packaging material.

According to a further alternative not shown, packaging machine could be configured to execute any other treatment and/or handling.

According to a preferred non-limiting embodiment, conveying apparatus 1 also comprises a coupling structure 3 carrying conveying devices 2. In particular, coupling structure 3 is interposed between the two conveying devices 2.

Preferentially but not necessarily, each one of conveying devices 2 is mounted onto one respective lateral side of coupling structure 3.

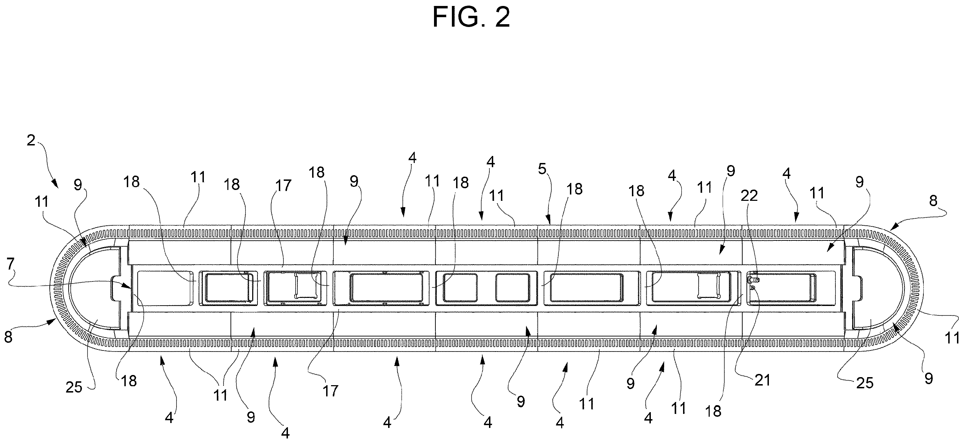

With particular reference to Figures 1 and 2, each conveying device 2 comprises:
- a plurality of drive modules 4 arranged in succession of one another and at least partially defining a track 5, in particular an endless track 5;
- one or more carts 6 being moveably engaged and/or being movably engageable on drive modules 4 and/or track 5; and
- a support structure 7 supporting and/or carrying at least drive modules 4.

According to a preferred non-limiting embodiment, each conveying device 2 also comprises one or more auxiliary drive modules 8 coupled to the respective support structure 7.

Preferentially but not necessarily, each drive module 4 defines a respective linear portion of track 5, and in particular each auxiliary drive module 8 defines a respective curved portion of track 5.

According to a preferred non-limiting embodiment, conveying apparatus 1 comprises a control unit and/or each conveying device 2 comprises a respective single control unit configured to control advancement of the respective carts 6 along the respective track 5 and along a respective advancement path P as defined by the respective track 5, in particular by controlling the respective drive modules 4 and/or the respective auxiliary drive modules 8.

Preferentially but not necessarily, advancement of the respective carts 6 of each conveying device 2 is controlled independently of the other respective carts 6.

It should be noted that independently controlled identifies the possibility to vary the advancement speeds and advancement accelerations and advancement decelerations of carts 6 independently from the other carts 6 of the respective conveying device 2. This control is such that the relative distance between successive carts 6 may vary, but any (destructive) impact between successive carts 6 is avoided.

According to a preferred non-limiting embodiment, each track 5 presents an endless configuration defining an endless advancement path P.

In particular, by providing for the respective drive modules 4 and auxiliary drive modules 8 it is possible to define and/or obtain the endless configuration of the respective track 5.

According to a preferred non-limiting embodiment, advancement path P comprises linear portions P1 and curved portions P2. In particular, drive modules 4 define the linear portions PI, and even more particular auxiliary drive modules 8 define the curved portions P2.

According to the specific embodiment disclosed, drive modules 4 and auxiliary drive modules 8 are arranged such that the respective track 5 (and the respective advancement path P) present(s) a substantially oval shape.

According to a preferred non-limiting embodiment, each drive module 4 and/or each auxiliary drive module 8 is configured to selectively determine and/or generate, in use, a respective electromagnetic field for interaction with the respective carts 6, in particular with at least one respective interaction elements of the respective cart 6, for controlling advancement of the respective carts 6 along the respective track 5 and/or the respective advancement path P.

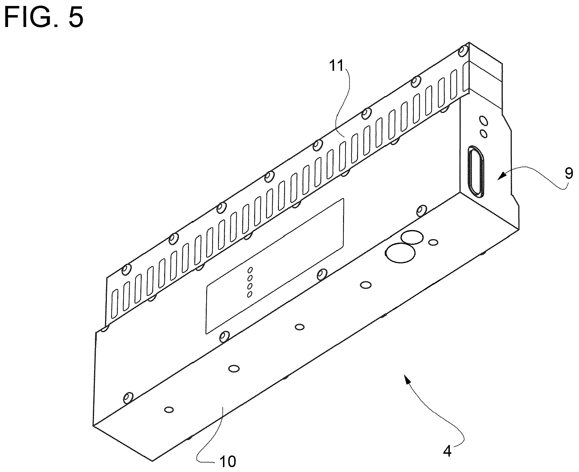

Preferentially but not necessarily and with particular reference to Figures 1, 2 and 5, each drive module 4 and/or each auxiliary drive module 8 comprises at least one respective housing 9 and at least one respective coil (not shown and known as such) arranged within the respective housing 9. In particular, each coil is configured to be selectively controlled so as to determine and/or define the respective electromagnetic field for interacting with the interaction elements of the respective carts 6.

According to a preferred non-limiting embodiment, the control unit and/or the single control units are configured to control (the respective) drive modules 4 and/or (the respective) auxiliary drive modules 8, in particular the respective coils, for selectively controlling the respective electromagnetic fields.

According to a preferred non-limiting embodiment, each drive module 4 and/or each auxiliary drive module 8 also comprises further electronic components arranged within the respective housing 9.

Preferentially but not necessarily, each housing 9 is realized (fully and/or at least partially) from and/or comprises a metallic material, such as e.g. aluminum.

According to a preferred non-limiting embodiment, each housing 9 comprises an engagement surface

With particular reference to Figures 1 and 2, each drive module 4 and/or each auxiliary drive module 8, in particular the respective housing 9, comprises an engagement surface 10 being in contact with support structure 7. In particular, engagement surface 10 is arranged at a first end portion of the respective housing 9.

According to a preferred non-limiting embodiment, each housing 9 also comprises a coupling section 11 configured to receive at least a portion of the respective carts 6 for guiding carts 6. In particular, each coupling section 11 defines a second end portion of the respective housing 9 opposed to the respective first end portion.

According to a preferred non-limiting embodiment, coupling sections 11 of the respective drive modules 4 and/or auxiliary drive modules 8 define and/or determine the respective track 5.

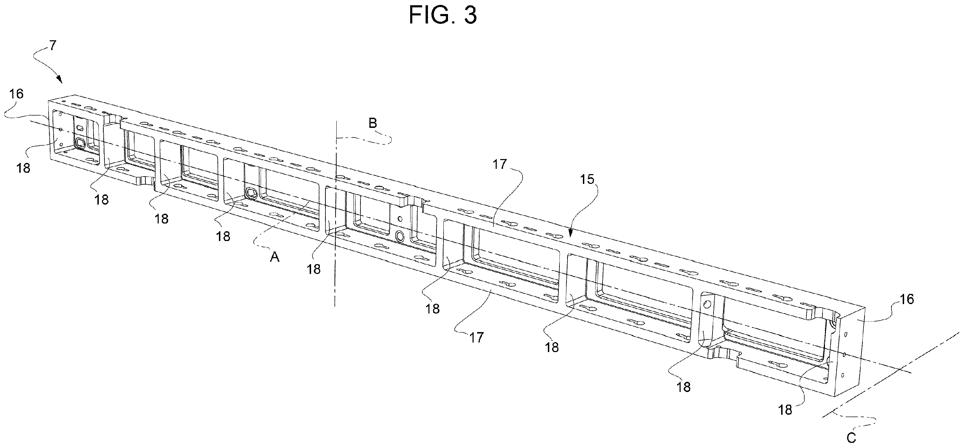

With particular reference to Figures 1 to 4, each support structure 7 comprises a coupling surface 15, in particular being defined by outer surfaces of support structure 7.

In particular, the respective engagement surfaces 10 of the respective drive modules 4 and/or auxiliary drive modules 8, in particular the respective housings 9, are arranged in contact with a respective portion of the respective coupling surface 15.

Even more particular, each housing 9 is fixed to the respective support structure 7 so that the respective engagement surfaces 10 are in contact with the respective portion of the respective coupling surface 15.

According to a preferred non-limiting embodiment, the respective coupling surface 15 of each support structure 7 is defined and/or determined by outer surfaces of the respective support structure 7.

According to a preferred non-limiting embodiment, each support structure 7 extends along a respective longitudinal axis A, a first transversal axis B and a second transversal axis C, being perpendicular to one another.

According to the non-limiting embodiment disclosed, the extension of each support structure 7 along the respective longitudinal axis A is larger than the extension along the respective first transversal axis B and the respective second transversal axis C.

In particular, drive modules 4 are arranged on support structure 7 parallel to longitudinal axis A and/or linear portion P1 is parallel to longitudinal axis A.

In particular, each auxiliary drive module 8 is arranged on the respective support structure 7 at a respective end face 16 of the respective support structure 7.

According to a preferred non-limiting embodiment, each support structure 7 comprises two main plates 17 being parallel to and spaced apart from one another, and in particular a plurality of transversal plates 18 transversal to main plates 17.

In particular, main plates 16 extends parallel to longitudinal axis A.

In particular, transversal plates 17 extend parallel to first transversal axis B.

According to a preferred non-limiting embodiment, at least two respective transversal plates 18 define and/or carry the respective end faces 16 of the respective support structure 7.

Preferentially but not necessarily, the respective main plates 17 of each support structure 7 extend between the respective transversal plates 18 defining and/or carrying the respective end faces 16.

According to a preferred non-limiting embodiment, outer surfaces of the respective main plates 17 and the respective transversal plates 18 defining and/or carrying the respective end faces 16 define the respective coupling surface 15 of the respective support structure 7.

According to a preferred non-limiting embodiment, each drive module 4 is mounted to one respective main plate 17, and in particular each auxiliary drive module 8 is mounted to at least one respective transversal plate 18.

According to a preferred non-limiting embodiment, each support structure 7 is connected to the coupling structure 3, in particular at the respective lateral side of coupling structure 3, for connecting the respective conveying device 2 to coupling structure 3.

Advantageously, each conveying device 2 comprises cooling means 19 for cooling the respective support structure 7 so as to cool at least the respective drive modules 4.

It should be noted that drive modules 4, in particular the respective coil and/or the respective electronic components, generate, in use, heat, which needs to be removed from drive modules 4 so as to avoid any overheating. According to the present invention this is achieved by cooling the respective support structure 7, which then removes the created energy (the heat) from the respective drive modules 4.

According to a preferred non-limiting embodiment, each cooling means 19 is configured to cool at least portions of the respective support structure 7 by means of a cooling fluid, such as cooled water. In particular, with respect to the present invention, a cooling fluid has a temperature, which allows heat produced by the coils and/or the electronic components to be removed.

Preferentially but not necessarily, cooling means 19 comprise a supply unit for conditioning and/or providing the cooling fluid.

According to a possible non-limiting embodiment, conveying apparatus 1 comprises a single supply unit for providing the cooling fluid to the respective cooling means 19 of the conveying devices 2.

According to a preferred non-limiting embodiment, each cooling means 19 comprises at least one flow conduit for the cooling fluid, the flow conduit being coupled to the respective support structure 7.

According to a possible non-limiting embodiment not shown, the flow conduits are at least partially formed by tubes attached and/or coupled to the respective support structure 7.

According to a preferred non-limiting embodiment, each support structure 7 comprises at least one internal flow conduit 20 for the cooling fluid, in particular the internal flow conduit 20 defining and/or determining the respective flow conduits. In particular, the internal flow conduit 20 extending within support structure 7 along its entire extension.

In particular, in this manner, it is possible to introduce the cooling fluid into the respective support structure 7, which, in use, circulates therein and cools (i.e. removes the heat generated by the coils and/or the electronic components) support structure 7.

According to a preferred non-limiting embodiment, each internal flow conduit 20 comprises at least an inlet opening 21 and at least an outlet opening 22, in particular inlet opening 21 and outlet opening 22 being in fluid connection with the respective supply unit, even more particular by means of respective tubes of the respective cooling means 19 and/or the respective supply unit. In particular, each internal flow conduit 20 defines together with the respective supply unit (and the respective tubes) a closed circuit allowing for the flow of the cooling fluid.

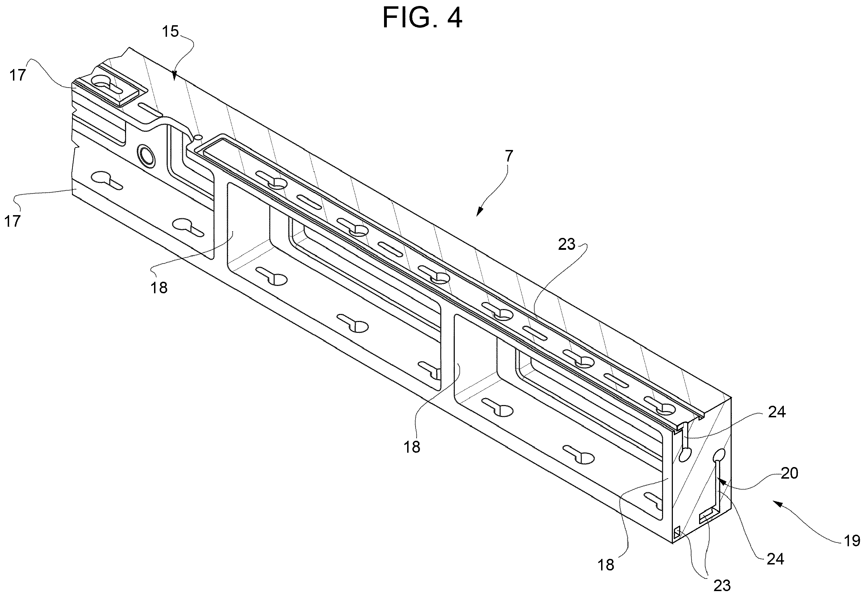

With particular reference to Figure 4, each internal flow conduit 20 comprises main conduit portions 23 being arranged at and/or directly below respective portions of the respective coupling surface 15 of the respective support structure 7. In this manner, at least portions of coupling surface 15 become cooled (i.e. heat is removed). In particular, this guarantees in an efficient manner that the heat generated and/or created at least by the respective drive modules 4 is removed as the generated and/or created heat is transfer by means of the contact between the respective engagement surfaces 10 onto the respective portions of the respective coupling surface 15.

According to a preferred non-limiting embodiment, main conduit portions 23 are arranged within respective main plates 17.

According to a preferred non-limiting embodiment, each internal flow conduit 20 also comprises connecting conduit portions 24 fluidically connecting the respective main conduit portions 23 with one another. In particular, connecting conduit portions 24 are provided within the respective transversal plates 18.

With particular reference to Figure 1, each cooling means 19 comprises cooling plates 25 laterally mounted on respective auxiliary drive modules 8 and configured to receive a cooling fluid, in particular from the respective supply unit, for cooling the respective auxiliary drive modules 8. This allows to improve the cooling (i.e. the removal of the heat generated by the respective coils and/or electronic components of the respective auxiliary drive modules 8) of the respective auxiliary drive modules 8.

According to a preferred non-limiting embodiment, each support structure 7 is realized (at least partially) from and/or comprises a respective material. In particular, the material of support structure 7 is similar and/or the same as the material of housings 9. E.g. also, each support structure 7 is realized from aluminum. It should be noted that similar means that e.g. each support structure 7 is realized from a respective metal or alloy and housings 7 are also made from this kind of metal or alloy, but the specific treatments for obtaining the respective material or the respective compositions may differ.

The use of the same or a similar material is advantageous, as this guarantees that each support structure 7 and housings 9 present similar or the same thermal behavior as expressed by the substantially same thermal expansion coefficient. This avoids the creation of surface tensions between each support structure 7 and the respective housings 9 due to changes of the temperatures.

According to an alternative non-limiting embodiment, the material of each support structure 7 and of each housing 9 have a similar or a substantially similar thermal expansion coefficient, in particular for avoiding the creation of surface tensions between each support structure 7 and the respective housings 9 due to changes of the temperatures.

According to a preferred non-limiting embodiment, each conveying device 2 further comprises a compensation layer, in particular a deformable compensation layer, even more particular an elastically deformable compensation layer, arranged between the respective coupling surface 15 and the respective engagement surfaces 10. In particular, the compensation layer is configured to compensate for differences in the surface roughness of the respective coupling surface 15 and the respective engagement surfaces 10.

It should be noted that the respective coupling surface 15 and the respective engagement surfaces 10 present respective surface roughness on the microscopic scale, which also defines and/or determines an effective contact area between the respective coupling surface 15 and the respective engagement surfaces 10. Any changes in the local temperatures may result in the occurrence of unwanted surface tensions. By providing for the compensation layer, the occurrence of these surface tensions is further reduced.

According to a preferred non-limiting embodiment, each compensation layer presents a thickness in the millimeter-range (i.e. a few millimeters).

According to the specific non-limiting embodiment shown, conveying apparatus 1 is designed such that one cart 4 of each conveying device 2 is coupled to one respective cart 4 of the other conveying device 2 (defining a respective pair of carts 6) . In particular, each pair of carts 6 is coupled to one another by means of a coupling mechanism 26.

According to a preferred non-limiting embodiment, at least one of the carts 6 of each pair of carts 6 comprises at least one operative assembly 27 configured to handle and/or treat at least one package. In the specific non-limiting case shown, each operative assembly 27 is configured to receive and to retain a closure or a closure assembly and to apply the closure or closure assembly onto one respective package (the package advancing along the package advancement path).

Preferentially but not necessarily, operation of each operative assembly 27 is controlled by means of a control of the relative position and/or the relative velocity and/or the relative acceleration between the respective carts 6 of the respective pair of carts 6. In particular, the respective coupling mechanism 26 is coupled to the respective operative assembly 27 and is configured such to modify its specific configuration in dependence of the relative position and/or the relative velocity and/or the relative acceleration between the respective carts 6 of the respective pair of carts 6 for controlling operation of the respective operative assembly 27.

In use, the packaging machine handles and/or treats and/or produces the packages filled with the pourable product.

In particular, the handling and/or treatment and/or production of the packages is executed by means of operative assemblies 27.

Even more particular, operation of operative assemblies 27 is controlled by means a control of the advancement of the respective carts 6 of the respective pair of carts 6 along the respective advancement paths P and/or tracks 5, in particular by means of controlling the relative position and/or the relative velocity and/or the relative acceleration between the respective carts 6 of the respective pair of carts 6.

According to a preferred non-limiting embodiment, carts 6 of each conveying device 2 advance along the respective track 5 and/or advancement path P. In particular, advancement of each cart 6 is controlled (by the control unit and/or the respective single control unit) by means of a selective control of the respective coils of the respective drive modules 4 and/or auxiliary drive modules 8.

Advantageously, during operation of each conveying device 2 the respective support structure 7 is cooled by means of the respective cooling means 19 for cooling at least the respective drive modules 4.

Preferentially but not necessarily, each support structure 7 is cooled by means of a flow of the cooling fluid, in particular flowing within the respective support structure 7.

Preferentially but not necessarily, the flow of the cooling fluid occurs within the respective internal flow conduits 20. In particular, the respective supply unit introduces and extracts the cooling fluid into and from the respective internal flow conduit 20 through respectively the corresponding inlet opening 21 and outlet opening 22.

Preferentially but not necessarily, auxiliary drive modules 8 are also cooled by means of the respective cooling plates 25.

The advantages of conveying devices 2 according to the present invention will be clear from the foregoing description.

In particular, the cooling of at least drive units 4 is achieved in an easy manner by cooling the respective support structures 7 and coming along with a simple design.

A further advantage resides in providing for the internal flow conduits 20, which allows to maximize the cooling effect.

An even other advantage is seen in that it is possible to remove drive modules 4 without the need to dismount portions of the cooling means 19.

A further advantage resides in that the internal flow conduits 20 can be easily put into fluid connection with the supply unit by means of respective tubes, which can be easily and cleanly dismounted.

An even further advantage resides in that the support structure 7 and housings 9 are of a similar or the same material and/or have a similar thermal behavior, thereby avoiding the formation of any tensions and deformations.

Clearly, changes may be made to conveying apparatus 1 and/or or conveying devices 2 as described herein without, however, departing from the scope of protection as defined in the accompanying claims.

## Claims

1. A conveying device (2) comprising:
- a plurality of drive modules (4) arranged in succession of one another and at least partially defining a track (5);
- at least one cart (6) being moveably engaged and/or engageable to the drive modules (4) and/or the track (5);
- a support structure (7) supporting and/or carrying the drive modules (4); and
- cooling means (19) coupled to the support structure and configured to cool the support structure (7) for cooling the drive modules (4).

2. Conveying device according to claim 1, wherein the cooling means (19) are configured to cool the support structure (7) by means of a cooling fluid.

3. Conveying device according to claim 1 or 2, wherein the cooling means (19) comprise at least one flow conduit (20) for the cooling fluid;
wherein the flow conduit (20) is coupled to the support structure (7) and/or the support structure (7) comprises the flow conduit (7).

4. Conveying device according to any one of the preceding claims, wherein the support structure (7) comprises at least one internal flow conduit (20) for the cooling fluid.

5. Conveying device according to claim 4, wherein the internal flow conduit (20) comprises at least an inlet opening (21) and at least an outlet opening (22) arranged at an outer surface of the support structure (7) .

6. Conveying device according to claim 4 or 5, wherein the support structure (7) comprises a coupling surface (15) and each drive module (4) comprises an engagement surface (10) arranged in contact with a respective portion of the coupling surface (15);
wherein the internal flow conduit (20) comprises conduit portions (23) being arranged at the coupling surface (15) of the support structure (7), so as to cool the coupling surface (15) for cooling the drive modules (4) .

7. Conveying device according to any one of the preceding claims, wherein each drive module (4) comprises at least:
- a housing (9); and
- one coil arranged within the housing (9) and configured to selectively generate an electromagnetic field for controlling advancement of the cart (4) along the track (5) ;
wherein the support structure (7) is made from a first material and the housings (9) of the drive modules (4) are made from a second material;
wherein the first material and the second material are the same or similar and/or the thermal expansion coefficient of the first material and the second material are substantially identical.

8. Conveying device according to any one of the preceding claims, wherein the support structure (7) comprises a coupling surface (15) and each drive module (4) comprises an engagement surface (10) placed onto a respective portion of the coupling surface (15);
the conveying device (2) further comprises a compensation layer arranged between the coupling surface (15) and the engagement surfaces (10);
wherein the compensation layer is configured to compensate for differences in the surface roughness of the coupling surface (15) and the engagement surfaces (10) .

9. Conveying device according to any one of the preceding claims, further comprising one or more auxiliary drive modules (8) for defining curved portions of the track (5);
wherein the drive modules (4) define linear portions of the track (5);
wherein the cooling means (19) comprise cooling plates (25) laterally mounted on the auxiliary drive modules (8) and configured to receive a cooling fluid for cooling the auxiliary drive modules (8).

10. Packaging machine for the treatment and/or handling of packages, in particular packages filled with a pourable product, comprising at least one conveying device (2) according to any one of the preceding claims.

11. Packaging machine according to claim 10, comprising at least a further conveying device (2) parallel to the conveying device (2).

12. Packaging machine according to claim 11, wherein each cart (6) of the conveying device (2) is coupled to one respective cart (6) of the further conveying device (2);
wherein at least the cart (6) of the conveying device (2) comprises at least an operative assembly (27) configured to handle and/or treat at least one package.

13. Packaging machine according to claim 12, wherein operation of the operative assembly (27) is controlled by means of a control of the relative position and/or the relative velocity and/or the relative acceleration between the respective cart (6) of the conveying device (2) and the respective cart (6) of the further conveying device (2).

14. Method of cooling a conveying device (2) according to any one of claims 1 to 9, comprising the step of cooling the support structure (7) for cooling the drive modules (4).

15. Method according to claim 14, wherein a cooling fluid circulates within the support structure (7) for removing heat from the drive modules (4).
